# EUROPÄISCHE PATENTSCHRIFT

(11) **EP 0 979 795 B1**
(45) Veröffentlichungstag und Bekanntmachung des Hinweises auf die Patenterteilung: **19.02.2003**
(21) Anmeldenummer: 99112432.2
(22) Anmeldetag: 30.06.1999
(51) Int. Cl.: B65H 67/06, B65H 63/08, G01B 11/24, D01H 13/32, B07C 5/10, G06T 1/00

(54) **Verfahren zur Erkennung von Fadenresten auf Spinnkopshülsen**
Method for detecting waste yarn on bobbins
Procédé pour détecter le reste de fil sur les bobines de filature

(30) Priorität: 10.08.1998 DE 19836071
(43) Veröffentlichungstag der Anmeldung: 16.02.2000
(73) Patentinhaber: W. Schlafhorst & Co., 41061 Mönchengladbach (DE)
(72) Erfinder: Hermanns, Ferdinand-Josef, Dr.-Ing., 41812 Erkelenz (DE); Krüger, Andreas, Ing., 41065 Mönchengladbach (DE); Müllers, Harald, Dipö.-Ing., 41812 Erkelenz (DE)
(74) Vertreter: Hamann, Arndt, Dipl.-Ing.

(56) Entgegenhaltungen:
- EP-A- 0 402 731
- DE-A- 3 942 304
- DE-A- 4 305 562
- FR-A- 1 311 220
- US-A- 4 963 035
- US-A- 5 212 389

## Beschreibung

Die vorliegende Erfindung betrifft ein Verfahren sowie eine entsprechende Vorrichtung zur Erkennung von Fadenresten bzw. von Restgarn auf Spinnkopshülsen zum Einsatz in automatischen Spulmaschinen.

Moderne Spinnmaschinen haben einen hohen Ausstoß an Spinnkopsen, wodurch auch erhöhte Anforderungen an die Verarbeitungskapazität der nachgeordneten Spulmaschinen gestellt werden. Des weiteren ist es erforderlich, die abgespulten Hülsen in ausreichender Menge der Spinnmaschine wieder zuzuführen. Zur Sicherung eines hohen Automatisierungsgrades sind deshalb geschlossene Transportkreisläufe im Bereich der Spulmaschine sowie gegebenenfalls eine direkte Kopplung mit den Spinnmaschinen verbreitet.

In modernen automatisierten textilen Produktionsstätten unterliegen die Spinnkopshülsen somit einem Kreisprozeß. Der Materialfluß in einem derartigen geschlossenen Spinnkopsund Hülsentransportsystem nach dem Stand der Technik, wie es beispielsweise aus der EP 0402731 B1 bekannt ist, ist schematisch in Figur 6 dargestellt. Nach der Herstellung des Garns in einer Ringspinnmaschine gelangt der so entstandene Spinnkops automatisch zur Spulmaschine und wird dort auf Kopsträger aufgesteckt. Über Transportbänder wird der Spinnkops von der Aufsteckstation zu einer Kopsvorbereitungsstation 4 transportiert, um dort das Fadenende zu lösen und für das spätere sichere Erfassen bereitzulegen. Anschließend fährt der Spinnkops in eine Spulstelle 1, wo der Spulprozeß durchgeführt wird.

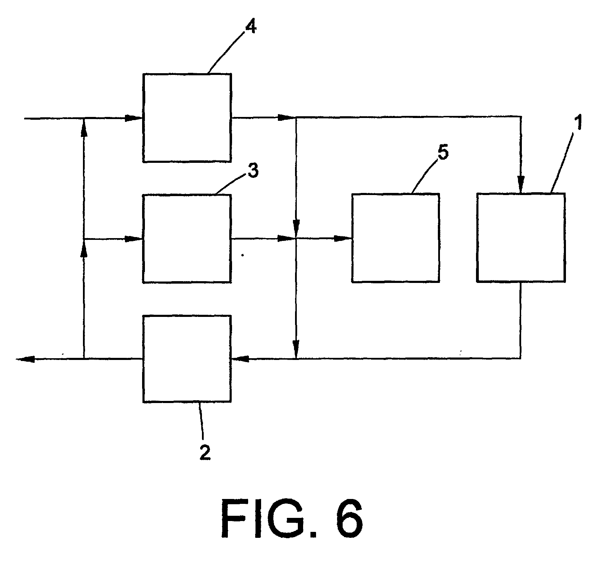

Speziell bei einem Fadenbruch kann es jedoch vorkommen, daß die Spulmaschine den Fadenanfang des eingelegten Spinnkopses verliert. Nach wenigen erfolglosen Spleißversuchen wird die vermeintlich leere Spinnkopshülse schließlich von der Spulstelle 1 ausgeworfen. Es ist somit nicht gewährleistet, daß die ausgeworfenen Spinnkopshülsen tatsächlich immer leer sind. Vielmehr unterscheiden sich die ausgeworfenen Spinnkopshülsen hinsichtlich der verbliebenen Restbefüllung und der daraus resultierenden Weiterverarbeitung. Zur Automatisierung des Spulprozesses ist es daher notwendig, den Zustand der aus der Spulstelle 1 ausgeschleusten Spinnkopse zu bestimmen, um somit einzelne Restfäden oder eine eventuell vorhandene Restbefüllung der Spinnkopshülse zuverlässig erfassen zu können. Zu diesem Zweck ist bei dem in Figur 6 gezeigten Transportsystem ein elektromechanischer Hülsenwächter 2 vorgesehen, der die auf der Spinnkopshülse verbliebene Restgarnmenge detektiert. Der Hülsenwächter 2 kann in Form eines elektro-mechanischen Sensors ausgestaltet sein
(z.B. DE-41 10 626 A1), wobei ein Metallkamm seitlich über die Spinnkopshülse streift. Je nachdem, wie weit dieser Metallkamm über die Hülse streifen kann, werden Rückschlüsse über die Restfüllmenge der Spinnkopshülse gezogen. Vollständig abgespulte Spinnkopse, d. h. leere Hülsen, werden zur erneuten Befüllung automatisch zur Spinnmaschine zurücktransportiert. Wurde hingegen ein auf der Spinnkopshülse verbliebener Fadenrest von dem Hülsenwächter 2 erkannt, wird beispielsweise mit Hilfe von Weichen die Transportrichtung der entsprechenden Spinnkopshülse derart abgezweigt, daß die Spinnkopshülse über einen Nebentransportpfad einer Hülsenreinigungseinrichtung 3 zugeführt wird. Diese Hülsenreinigungseinrichtung 3 hat die Aufgabe, das Restgarn von der Spinnkopshülse zu entfernen. Hierzu wird der Garnwickel gegebenenfalls aufgeschnitten und dann vom Spinnkops gestreift. Da jedoch auch der Fall auftreten kann, daß der auf der Hülse verbliebene Fadenrest noch wiederverwendbar ist und somit der Spulstelle 1 erneut zugeführt werden kann, liefert der Hülsenwächter 2 auch eine Aussage darüber, ob die auf der Spinnkopshülse detektierte Restgarnmenge wiederverwendbar ist. Ist dies der Fall, wird die Spinnkopshülse nicht der Hülsenreinigung 3 zugeführt, sondern zu der Kopsvorbereitungseinheit 4 transportiert, die wiederum den Fadenanfang des Spinnkopses erfaßt und nach Ablegen des Fadenanfangs an vorbestimmter Stelle den Spinnkops wieder einer Spulstelle 1 zuführt.

Anstelle der in Figur 6 dargestellten Ausgestaltung, bei der der Hülsenwächter 2 als Multifunktionssensor dient, der zwischen leeren Hülsen, Hülsen mit geringem Fadenrest und Hülsen mit einem noch verarbeitbaren Fadenrest unterscheiden kann, ist es auch möglich, an der Position des Hülsenwächters 2 einen ersten Sensor vorzusehen, der lediglich erkennt, ob auf der Spinnkopshülse ein Fadenrest vorhanden ist oder nicht, wobei in diesem Fall vor einer Abzweigung zur Hülsenreinigung 3 ein weiterer Sensor vorgesehen ist, der schließlich hinsichtlich des Fadenrests unterscheidet, ob der verbliebene Fadenrest für eine Wiederverwendung ausreicht oder nicht und durch entsprechende Steuerung des Transportweges abhängig von dieser Unterscheidung die Spinnkopshülse entweder der Kopsvorbereitung 4 oder der Hülsenreinigung 3 zuführt.

Wie bereits zuvor erläutert worden ist, wird bei der in Figur 6 dargestellten Spulmaschine als Hülsenwächter 2 ein elektro-mechanischer Spinnkopstaster in Form eines Metallkamms verwendet, der jedoch mit mehreren Nachteilen verbunden ist. So muß bei dieser Ausgestaltung der Hülsenwächter 2 für unterschiedliche Arten und Größen von Spinnkopshülsen von Hand neu justiert werden. Des weiteren kann sich der Metallkamm mit der Zeit abnutzen und einzelne Restfäden werden nicht von der Spinnkopshülse entfernt, sondern durch den Metallkamm lediglich heruntergeschoben, so daß sich diese Restfäden bei einem anschließenden Spinnprozeß mit dem Neufaden verwickeln und somit einen Stillstand der Ringspinnspindel verursachen können. Ebenfalls nachteilig wirkt sich aus, daß die mechanischen Tastelemente des Sensors insbesondere feines Garn beschädigen können.

Aus der JP-U-63-107370 ist ein ähnlicher mechanischer Sensor zur Erkennung von Restfäden auf Spinnkopshülsen bekannt. Gemäß dieser Druckschrift wird ein drehbar gelagerter mechanischer Arm an der Spinnkopshülse von oben nach unten entlang bewegt, wobei der drehbar gelagerte Arm je nach Füllgrad der Spinnkopshülse mehr oder weniger ausgelenkt werden kann. Die Auslenkung des Armes wird mit Hilfe eines entsprechenden Sensors erfaßt, um somit Rückschlüsse auf die eventuell vorhandene Restwicklung der Spinnkopshülse zu gewinnen.

Neben der zuvor beschriebenen Erkennung von Fadenresten auf Spinnkopshülsen mit Hilfe mechanischer Sensoren oder Taster sind auch Vorrichtungen bekannt, die berührungslos Restgarn oder Fadenreste auf Spinnkopshülsen erkennen.

Die DE-AS-1 278 308 schlägt zu diesem Zweck die Bestrahlung der Spinnkopshülse mit Hilfe einer Lichtquelle vor, wobei das von der Spinnkopshülse reflektierte Licht mit Hilfe einer Fotozelle erfaßt wird. Der von der Spinnkopshülse reflektierte Lichtstrahl beeinflußt abhängig davon, ob auf der Spinnkopshülse ein Wicklungsrest vorhanden ist oder nicht, mehr oder weniger die Fotozelle. Zwischen der Spinnkopshülse und der als Sensor dienenden Fotozelle erfolgt während des Abtastvorgangs stets eine Relativbewegung, d. h. die Spinnkopshülse wird waagrecht an der Fotozelle vorbeitransportiert.

Zudem ist aus der gattungsbildenden DE 40 08 795 C2 bekannt, zum Erfassen von Restfäden auf einer Spinnkopshülse die Spinnkopshülse aufrechtstehend zu transportieren und die Spinnkopshülse mit Hilfe einer Relativbewegung zwischen der Spinnkopshülse und einem Sensor abzutasten, wobei der Sensor an einer ortsfesten Hubeinrichtung angebracht ist, mit deren Hilfe er entlang der Spinnkopshülse mit annähernd gleichmäßigem Abstand zur Hülsenoberfläche bewegt wird. Der Sensor kann insbesondere ein Fotosensor sein, der unter einem bestimmten Winkel zur Vertikalen auf die Oberfläche der Spinnkopshülse aufgestrahltes und von der Spinnkopshülse reflektiertes Licht auswertet, um somit Fadenreste auf der Spinnkopshülse zu erkennen.

Aus der JP 54-30943 ist schließlich ebenfalls die berührungslose Abtastung von Spulen bekannt, wobei die in dieser Druckschrift offenbarte Vorrichtung zur Überprüfung von Vorgarnspulen dient, um das Äußere der Vorgarnspulen hinsichtlich Oberflächenfehler etc. überprüfen zu können. Die gemäß dieser Druckschrift vorgeschlagene Abtastvorrichtung umfaßt eine Lichtquelle, deren Licht durch einen entsprechend der Kammlinie der Vorgarnspule ausgestalteten und angeordneten Schlitz auf die Vorgarnspule abgestrahlt wird, wobei eine Fernsehkamera die Vorgarnspule abtastet. Insbesondere tastet die Fernsehkamera die Vorgarnspule zeilenweise ab und ermittelt aufgrund eines Vergleichs mit Referenzwerten die Qualität der Vorgarnspule, um Vorsprünge, Wicklungslöcher usw. der Vorgarnspule feststellen zu können. Die zuvor beschriebene Vorrichtung dient jedoch nicht zur Erkennung von Fadenresten oder Restgarn auf Spinnkopshülsen.

Der vorliegenden Erfindung liegt nunmehr die Aufgabe zugrunde, ein Verfahren sowie eine entsprechende Vorrichtung zur Erkennung von Fadenresten auf Spinnkopshülsen zu schaffen, wobei eine sicherere und zuverlässigere Detektierung von Fadenresten möglich ist. Auch sollen mit Hilfe der vorliegenden Erfindung nicht nur Fadenreste erkannt werden können, sondern auch zuverlässige Aussagen über den Füllgrad des Spinnkopses ermöglicht werden, so daß bei wiederverwendbaren Fadenresten der entsprechende Spinnkops, gegebenenfalls nach Durchlaufen einer Spinnkopsvorbereitungseinrichtung zur Erfassung des Fadenanfangs, erneut einer Spulstelle zugeführt werden kann.

Die zuvor genannte Aufgabe wird gemäß der vorliegenden Erfindung durch ein Verfahren mit den Merkmalen des Anspruches 1 bzw. eine Vorrichtung mit den Merkmalen des Anspruches 13 gelöst. Die Unteransprüche beschreiben jeweils bevorzugte und vorteilhafte Ausführungsformen der vorliegenden Erfindung, die ihrerseits zu einer bestmöglichen Abtastung der Spinnkopshülsen und einer möglichst einfachen und dennoch zuverlässigen Auswertung der dabei gewonnenen Informationen beitragen.

Auch gemäß der vorliegenden Erfindung werden Fadenreste berührungslos erkannt, wobei jedoch digitale Bildsignale erzeugt werden, die einer digitalen Bildverarbeitung unterzogen werden. Um aus den digitalen Bilddaten Objektkonturen der zu untersuchenden Spinnkopshülse zu gewinnen, wird auf diese ein Kanten-Filteralgorithmus angewendet, mit dessen Hilfe Kanten, d. h. Helligkeits- oder Grauwertübergänge, in der digitalen Bildmatrix herausgearbeitet (segmentiert) werden können. Anhand der somit gewonnenen Objektkonturen ist eine zuverlässige Beurteilung des Zustands der jeweiligen Spinnkopshülse möglich, um insbesondere geringe Fadenreste auf der Spinnkopshülse zu erkennen sowie bei größeren Restbewicklungen beurteilen zu können, ob die somit erkannten Restbewicklungen wiederverwendbar sind.

Bei dem zu prüfenden Bereich handelt es sich in der Regel um den Bereich, der bei einem voll bewickelten Kops die Wicklung trägt. Es kann aber auch ausreichend sein, nur das untere Drittel der Hülse zu prüfen, auf dem mit größter Wahrscheinlichkeit Fadenreste anzutreffen sind.

Die Abtastung der Spinnkopshülse kann gemäß der vorliegenden Erfindung insbesondere während des Transports der Spinnkopshülse in Form einer Momentaufnahme durch eine Ganzbildkamera erfolgen. Bei der Kamera kann es sich insbesondere um eine CCD-Videokamera handeln, wobei eine Schwarz/Weiß-Aufnahme genügt. Zur Verbesserung der Bildausnutzung, d.h. zur Erzielung einer höheren Bildauflösung, kann eine optische Verzerrung über eine Zylinderoptik oder einen Hohlspiegel vorgesehen sein. Ebenso trägt eine Drehung der Kamera um 90° um ihre optische Achse zu einer höheren Bildauflösung bei. Mit Hilfe eines Bildwandlers kann das von der Videokamera gelieferte Bildsignal digitalisiert und einem nachgeschalteten Auswerterechner, beispielsweise in Form eines normalen Personal Computers, zur Verfügung gestellt werden. Dort wird das Bild mit einem speziell entwickelten Auswertealgorithmus analysiert, wobei die Auswertung eine zuverlässige Aussage über den Zustand des untersuchten Prüflings liefert.

Anstelle einer CCD-Kamera kann auch ein digitaler Fotoapparat zur Abtastung der Spinnkopshülsen eingesetzt werden, wobei bei einem derartigen digitalen Fotoapparat die Digitalisierung des aufgenommenen Bildes kameraintern erfolgt, so daß keine nachfolgende Digitalisierung mit Hilfe eines Bildwandlers erforderlich ist.

Die Ausleuchtung eines Prüflings erfolgt vorteilhafterweise mit einer diffuses Licht abstrahlenden Lichtquelle. Eine derartige Lichtquelle kann beispielsweise aus mehreren Feldern ultraheller Leuchtdioden (LED) bestehen, wobei diese Leuchtfelder derart angeordnet sind, daß die Ränder und Konturen des Spinnkopses betont werden und keine störenden Reflexionen auftreten. Für die Verwendung von Leuchtdioden spricht ihre lange Lebensdauer, ihre Robustheit sowie ihre geringe Leistungsaufnahme. Durch eine farbige Mischung der Leuchtdioden (rot, grün und gelb) kann eine Verbreiterung des Farbspektrums erzielt werden. Durch den Einsatz eines Diffusors, beispielsweise in Form einer Mattscheibe oder Streuscheibe, kann trotz der an sich punktförmigen Abstrahlcharakteristik der Leuchtdioden eine homogene Ausleuchtung des jeweiligen Prüflings erreicht werden. Die Anordnung der Leuchtdioden sollte vorteilhafterweise derart sein, daß es zu keiner Totalreflexion des Lichts dieser Leuchtdioden zu der jeweiligen Bildaufnahmeeinrichtung hin kommen kann. Anstelle der Verwendung verschiedenfarbiger Leuchtdioden können auch die in letzter Zeit zunehmend auf dem Markt erhältlichen weißen Leuchtdioden verwendet werden.

Die gemäß der vorliegenden Erfindung durchgeführte digitale Bildverarbeitung basiert im wesentlichen auf der Extraktion und der Analyse der Objektstrukturen des jeweiligen Prüflings, insbesondere der Hülsenberandung, der Fadenlagen und der spezifischen Hülsenmerkmale. Zur Verbesserung des Kontrasts zwischen Hintergrund, Spinnkopshülse und Fäden kann die digitale Bildmatrix wechselweise quadriert, rückskaliert und schließlich zur ursprünglichen Bildmatrix wieder hinzuaddiert werden. Zur Kantenfilterung kann insbesondere der Sobel-Filteralgorithmus angewandt werden, wobei die somit verarbeiteten Bilddaten anschließend mit Hilfe eines dynamischen Schwellenwerts binärisiert werden. Die durch diese Vorgehensweise gewonnenen Objektkonturen können für eine möglichst exakte Segmentierung der Bildmatrix nachfolgend mit Hilfe eines Erosionsverfahrens mit anschließender Differenzbildung verdünnt werden, wobei die Extraktion der Konturkanten der untersuchten Spinnkopshülse schließlich mit Hilfe eines speziellen Kantenverfolgungsverfahrens, z. B. durch Anwendung des Kettencodes nach Freeman, erfolgt. Die Interpretation der auf diese Weise extrahierten Objektkonturen erfolgt dann durch eine Bewertung ihrer geometrischen Form oder alternativ durch einen Vergleich mit einem Referenzbild einer Vergleichsspinnkopshülse.

Bei der Bildaufnahme gemäß der vorliegenden Erfindung ist es nicht erforderlich, den jeweiligen Prüfling vor der Bildaufnahmeeinrichtung anzuhalten, d. h. die Restgarnerkennung erfolgt vorteilhafterweise im Vorbeifahren der jeweiligen Spinnkopshülse.

Die Erfindung wird nachfolgend anhand eines bevorzugten Ausführungsbeispiels unter Bezugnahme auf die beigefügte Zeichnung näher erläutert.
Figur 1 zeigt schematisch den Aufbau einer Vorrichtung gemäß der vorliegenden Erfindung zur Erkennung von Fadenresten auf Spinnkopshülsen,
Figur 2 zeigt beispielhaft den Aufbau einer in Figur 1 verwendeten Lichtquelle,
Figur 3 zeigt eine Darstellung zur Erläuterung des Ablaufs der digitalen Bildverarbeitung bei der in Figur 1 dargestellten Vorrichtung,
Figur 4 zeigt eine Darstellung zur Erläuterung der Funktionsweise der gemäß der vorliegenden Erfindung durchgeführten Kantenfilterung einer Bildmatrix,
Figur 5 zeigt Darstellungen zur Erläuterung des gemäß einem bevorzugten Ausführungsbeispiel eingesetzten Kantenverfolgungsverfahren durch Anwendung des Kettencodes nach Freeman, und
Figur 6 zeigt eine schematische Darstellung zur Erläuterung der Transportwege von Spinnkopshülsen in einer automatischen Spulmaschine.

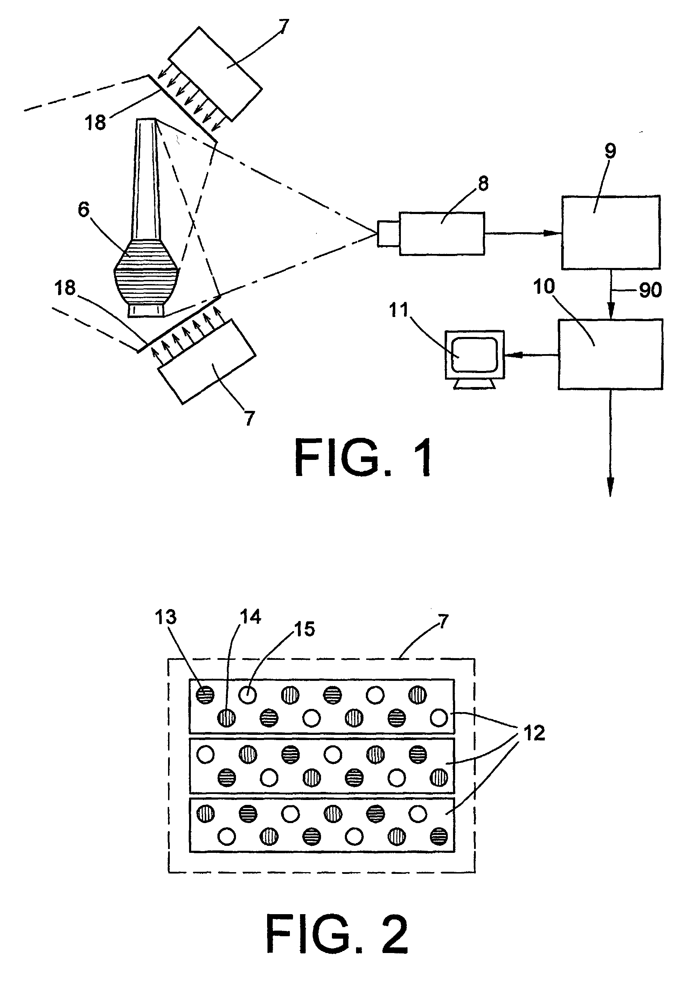

Die in Figur 1 gezeigte Vorrichtung umfaßt zur Erkennung von Fadenresten auf einer Spinnkopshülse 6 mindestens eine Lichtquelle 7, die die Spinnkopshülse 6 mit diffusem Licht bestrahlt. Als Bildaufnahmeeinrichtung wird eine Kamera 8, insbesondere eine CCD-Videokamera verwendet, die die somit bestrahlte Spinnkopshülse 6 abtastet und ein entsprechendes Video- oder Bildsignal bereitstellt, welches von einem nachgeordneten Bildwandler 9, beispielsweise in Form eines Frame-Grabbers, in digitale Bilddaten 90 umgesetzt wird, die einem Rechner 10 zugeführt werden. Der Rechner 10 unterzieht die digitalen Bilddaten 90 einer digitalen Bildverarbeitung und wertet somit die digitalen Bilddaten 90 aus, um Informationen über den Hülsenstatus bzw. Füllgrad der jeweiligen Spinnkopshülse 6 zu erhalten. Auf dem Monitor 11 des Rechners 10 kann ein der jeweiligen Spinnkopshülse 6 entsprechendes Bild dargestellt werden. Nachdem der Rechner 10 den Status bzw. Füllgrad der Spinnkopshülse ermittelt hat, wird die Transportbandsteuerung beispielsweise des in Figur 6 gezeigten Transportsystems einer automatischen Spulmaschine angesteuert, um entsprechend den Transportweg abhängig von dem erkannten Füllgrad der Spinnkopshülse 6 einzustellen. D. h. eine Spinnkopshülse 6 mit wiederverwendbaren Fadenresten wird der in Figur 6 gezeigten Kopsvorbereitung 4 zugeführt, während eine Spinnkopshülse 6 mit einem nicht wiederverwendbaren Fadenrest der Hülsenreinigung 3 zugeführt wird. Eine als leer erkannte Spinnkopshülse 6 wird schließlich weder der Kopsvorbereitung 4 noch der Hülsenreinigung 3 zugeführt, sondern unmittelbar zur Spinnmaschine transportiert.

Bei der in Figur 1 gezeigten Anordnung können insbesondere mehrere Lichtquellen 7 seitlich der zu untersuchenden Spinnkopshülse 6 derart angeordnet sein, daß sie möglichst gleichmäßig die Spinnkopshülse 6 ausleuchten. Jede Lichtquelle 7 kann, wie nachfolgend noch näher erläutert wird, in Form eines oder mehrerer Leuchtdioden-Arrays ausgebildet sein. Um das an sich punktuell bzw. gerichtet abgestrahlte Licht derartiger Leuchtdioden zu streuen und somit eine gleichmäßigere Bestrahlung des Spinnkopses 6 zu ermöglichen, wird in diesem Fall den Leuchtdioden ein Diffusor 18, beispielsweise in Form einer Mattoder Streuscheibe, vorgelagert.

Zur Implementierung der in Figur 1 gezeigten Vorrichtung in einer Spulmaschine müssen alle störenden äußeren Einflüsse minimiert werden. Dazu gehören unterschiedliche Lichtverhältnisse, mögliche Vibrationen der Maschine oder Staub- und Faserflug innerhalb der Produktionsstätte. Die Spinnkopshülsen 6 werden auf einem Träger transportiert und an einer vordefinierten Position innerhalb eines Gehäuses mit einer Ein- und Ausfahrtsöffnung an der Kamera 8 vorbeigeführt. Durch die Verkleidung dieses Gehäuses können die inneren von den äußeren Lichtverhältnissen getrennt und eine Verschmutzung der Kameralinse verringert werden. Zur Verhinderung des Staubflugs innerhalb der Bildaufnahmeumgebung kann ein Ventilator eingesetzt werden, der vorgefilterte Luft kontinuierlich durch eine weitere Öffnung in das Gehäuse befördert. In dem Gehäuse entsteht so ein Überdruck, wodurch die Staubpartikel aus dem Gehäuse herausgeblasen werden. Die Kamera wird vorzugsweise schwingungsgedämpft montiert, um Unschärfen durch Maschinenvibrationen zu vermeiden.

Mit Hilfe beispielsweise induktiver Nährungsschalter kann das Erreichen der Bildaufnahmeposition durch eine Spinnkopshülse 6 ermittelt werden. Wird ein derartiger Schalter von einer vorbeifahrenden Spinnkopshülse 6 ausgelöst, wird dies der Kamera 8 mitgeteilt, so daß die Bildaufnahme durch die Kamera 8 erfolgt. Die Spinnkopshülse 6 wird sofort aus der Bildaufnahmeumgebung zum nächsten Verzweigungspunkt des Transportbandes befördert. Die Zeit zwischen der Bildaufnahme und dem Erreichen des nächsten Verzweigungspunktes genügt, um durch den jeweils verwendeten Rechner 10 die durch die Bildaufnahme gewonnenen Informationen zu filtern und zu analysieren, so daß die Spinnkopshülse am nächsten Verzweigungspunkt abhängig vom Ergebnis der Bildauswertung entweder ausgeschleust, über die in Figur 6 gezeigte Kopsvorbereitung 4 erneut einer Spulstelle 1 vorgelegt oder zu der Hülsenreinigungsstation 3 transportiert werden kann. An den Verzweigungspunkten des jeweiligen Transportbandes können zu diesem Zweck Weichen in Form von elektro-magnetischen Stelleinrichtungen vorgesehen sein, die abhängig von den durch den Rechner 10 gelieferten Informationen über den Füllgrad des jeweils untersuchten Prüflings 6 entsprechend angesteuert werden. Da die Bildaufnahme im Vorbeifahren der Spinnkopshülse 6 erfolgt, entstehen keine Standzeiten während des Transports der Spinnkopshülse. Die Spulmaschine kann somit optimal ausgenutzt und der Durchsatz erhöht werden.

Durch den gemäß der vorliegenden Erfindung vorgeschlagenen Einsatz der digitalen Bildverarbeitung können die eingangs beschriebenen Probleme bei der herkömmlichen Erkennung von Fadenresten auf Spinnkopshülsen beseitigt werden, wobei mit Hilfe eines relativ überschaubaren Aufbaus und preiswerten Mitteln eine zuverlässige Aussage über den Füllgrad des jeweiligen Prüflings 6 getroffen werden kann.

Nachfolgend sollen die in Figur 1 dargestellten Lichtquellen 7 näher erläutert werden.

Die Aufgabe der in Figur 1 verwendeten Beleuchtung ist es, die relevanten Informationen der aufzunehmenden Spinnkopshülse 6 hervorzuheben und nicht relevante Informationen zu unterdrücken. Als Lichtquelle 7 kommen insbesondere Leuchtdioden (LED) in Frage, da es sich hierbei um die energiesparendste, langlebigste und kostengünstigste Beleuchtungsalternative handelt. Um das Farbspektrum der Beleuchtung zu erhöhen, werden vorzugsweise Leuchtdioden der Farben Rot, Gelb und Grün in Arrays gemischt angeordnet. Dadurch wird die Beleuchtung insgesamt weniger anfällig gegen farbabsorbierende Eigenschaften der Spinnkopshülse 6 und der gegebenenfalls vorhandenen Fadenreste.

Figur 2 zeigt beispielhaft den Aufbau einer in Figur 1 gezeigten Lichtquelle 7. Gemäß Figur 2 kann die Lichtquelle 7 mehrere Beleuchtungseinheiten 12 aufweisen, die beispielsweise jeweils durch Lochrasterkarten gebildet sind, auf denen die Leuchtdioden unterschiedlicher Farbe gemäß Figur 2 matrixartig aufgelötet sind. Durch die zueinander versetzte Anordnung der grünen, gelben bzw. roten Leuchtdioden 13, 14 bzw. 15 kann die Spinnkopsbeleuchtung an das Spektrum des weißen Lichtes angenähert werden. Anstelle der Verwendung verschiedenfarbiger Leuchtdioden 13-15 können auch die in letzter Zeit zunehmend auf dem Markt erhältlichen weißen Leuchtdioden verwendet werden. Um Reflexionen zu der in Figur 1 gezeigten Kamera 8 hin zu vermeiden, ist es vorteilhaft, die einzelnen Lichtquellen 7 seitlich von dem jeweiligen Prüfling 6 derart anzuordnen, daß die Lichtstrahlen der Lichtquellen 7 nicht direkt bzw. direkt reflektiert auf das Objektiv der Kamera fallen können.

Wie bereits erläutert worden ist, kommt als Bildaufnahmeeinrichtung insbesondere eine CCD(charged coupled device)-Kamera in Frage. Derartige CCD-Kameras verwenden CCD-Bildsensoren, die mit Hilfe strahlungsempfindlicher Flächen optische Bildinformationen durch Ausnutzung des Fotoeffekts an der strahlungsempfindlichen Fläche in elektrische Informationen umwandeln. Derartige CCD-Bildsensoren sind in Zeilen bzw. matrixartig in Flächen angeordnet, wobei die durch einen Lichteinfall in einem CCD-Sensor erzeugte Ladung in ein benachbartes Sensorelement weitergeschoben wird bis alle während einer Belichtungsphase generierten Ladungen in ein Ausleseregister und von dort in einen Bildspeicher verschoben worden sind.

Die CCD-Kamera 8 liefert auf diese Weise ein analoges mit Synchronimpulsen versehenes Video- oder Bildsignal, welches für die nachfolgende digitale Bildverarbeitung digitalisiert werden muß. Dies geschieht mit Hilfe des bereits in Figur 1 dargestellten Bildwandlers 9, der beispielsweise durch eine in dem Auswerterechner 10 installierte Frame-Grabber-Karte gebildet sein kann, der das von der CCD-Kamera 8 gelieferte Bildsignal digitalisiert, so daß das aufgenommene Bild auf dem Monitor 11 des Rechners 10 als Echtzeit-Videobild dargestellt werden kann.

Vorzugsweise wird die CCD-Kamera 8 im sogenannten Interlace-Modus betrieben, um ein Auftreten des Moiré-Effektes zu vermeiden, d.h. die Kamera 8 erzeugt nacheinander zwei Halbbilder, wobei das erste Halbbild aus Zeilen mit gerader Zeilennummer und das zweite Halbbild aus Zeilen mit ungerader Zeilennummer besteht. Als CCD-Kamera 8 wird vorteilhafterweise eine Schwarz/Weiß-Flächenkamera verwendet, die das von ihr aufgenommene Bild in Form von Graustufen darstellt. Derartige Schwarz/Weiß-Kameras zeichnen sich durch ihre relativ geringen Kosten und ihre hohe Zuverlässigkeit aus. Des weiteren ist auch denkbar, einen digitalen Fotoapparat zu verwenden, da lediglich Standbilder von einem Prüfling 6 aufgenommen werden müssen. In diesem Fall kann auf den nachgeschalteten Bildwandler 9 verzichtet werden, da der digitale Fotoapparat bereits digitale Bilddaten liefert.

Ein besonderes Problem bei der Bildaufnahme ergibt sich aus dem Seitenverhältnis der Spinnkopshülsen. Das Verhältnis zwischen der Höhe und der Breite einer durchschnittlichen Spinnkopshülse beträgt ca. 1:8, während handelsübliche CCD-Flächenkameras einem an die europäische Fernsehnorm angelehnten Seitenverhältnis von 4:3 unterliegen. Um dieses Manko zumindest teilweise zu kompensieren, ist es vorteilhaft, die CCD-Flächenkamera längs ihrer optischen Achse um 90° zu drehen. Des weiteren kann durch die zusätzliche Verwendung eines Hohlspiegels bzw. einer Zylinderoptik das Längen-Breitenverhältnis der zu betrachtenden Spinnkopshülse bezogen auf das optische Bild derart angepaßt bzw. verzerrt werden, daß es zu einer höheren Ausnützung der Fläche des Aufhahmefensters der CCD-Kamera 8 kommt.

Der Bildwandler 9 kann derart ausgestaltet sein, daß er die ihm zugeführten Bildinformationen direkt in eine Graustufenmatrix und ein bestimmtes Grafikformat umwandelt. Die somit erzeugten digitalen Bilddaten 90 werden anschließend dem Rechner 10 zur nachfolgenden Bildverarbeitung zugeführt, wobei die Bilddaten insbesondere auf der Festplatte des Rechners 10 zwischengespeichert werden, um nachfolgend über den Arbeitsspeicher darauf zuzugreifen. Als Grafikformat der digitalen Bilddaten kommt insbesondere ein Rasterformat in Frage. Bei der Vektorgrafik wird ein Bild in Form von Vektoren im Speicher abgelegt und aus ihnen berechnet. Alle geometrischen Körper lassen sich aus einfachen Grundelementen zusammensetzen, welche wiederum mit einfachen mathematischen Hilfsmitteln berechnet werden.

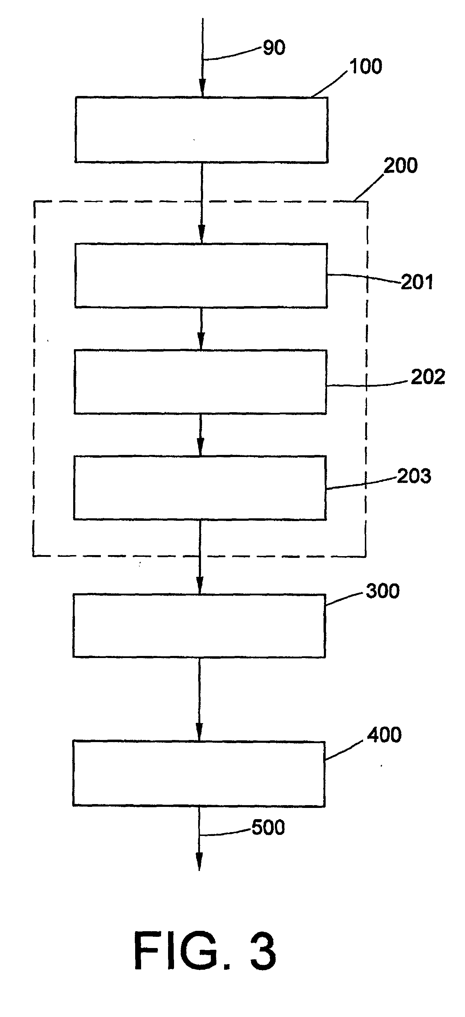

Die von dem Rechner 10 durchgeführte digitale Bildverarbeitung zur Erkennung von Fadenresten auf dem jeweils untersuchten Prüfling 6 soll nachfolgend näher anhand der Figuren 3-5 erläutert werden, wobei Figur 3 den allgemeinen Ablauf der digitalen Bildverarbeitung in dem Rechner 10 darstellt.

Nach Erhalt der digitalen Bilddaten 90 wird zunächst eine Kontrasterhöhung 100 durchgeführt, um die Grauwertübergänge zwischen Spinnkopshülse und Restfäden zu erhöhen. Zweck dieser Kontrasterhöhung ist es somit, helle Bereiche von dunklen Bereichen stärker abzuheben, um die anschließende Kantenfilterung effektiver zu machen. Zur Verbesserung des Kontrastes wird dabei zunächst der kleinste in der Bildmatrix auftretende Grauwert von jedem Grauwert der Bildmatrix abgezogen und das Ergebnis pixelweise quadriert, um hellere Pixel deutlicher von dunkleren Pixeln abzuheben. Anschließend wird das Ergebnis in den möglichen Wertebereich eingepaßt, d. h. rückskaliert. Die hellen Fäden heben sich gegenüber der Spinnkopshülse deutlicher ab, jedoch verwischt die Kante der Hülse gegenüber dem Hintergrund. Um diesen Nachteil zu kompensieren, wird zu der quadrierten Bildmatrix das Originalbild, d.h. die ursprüngliche Bildmatrix, hinzuaddiert.

Anschließend erfolgt die Segmentierung, d.h. das Herausarbeiten des jeweiligen Objekts aus der somit erhaltenen überarbeiteten Bildmatrix. Die Segmentierung 200 umfaßt im wesentlichen drei unterschiedliche Verarbeitungsschritte. Zunächst werden mit Hilfe einer Kantenfilterung die Grauwertübergänge in der Bildmatrix herausgearbeitet (Schritt 201). Anschließend wird das somit erhaltene Bild binärisiert (Schritt 202). Schließlich erfolgt eine Verdünnung der Konturen (Schritt 203), um weniger dicke Kanten zu erhalten (Schritt 203).

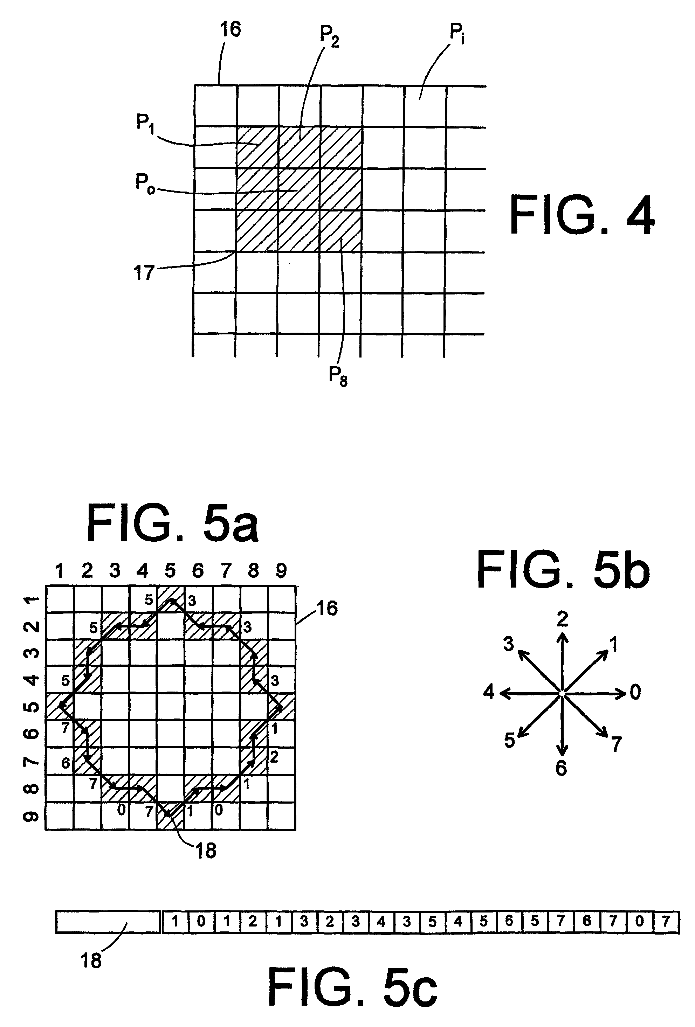

Der einfachste Weg, Objekte aus einer Bildmatrix zu segmentieren, ist die Identifizierung der Kanten, wodurch ein Herausarbeiten der Grauwertübergänge zwischen dem Hintergrund und dem eigentlichen Objekt erfolgt. Dabei wird die gesamte Bildmatrix dadurch gefiltert, daß ein Filterkern symmetrisch um einen aktuell zu bearbeitenden Bildpunkt gelegt und zeilenweise von links nach rechts über die gesamte Bildmatrix geschoben wird. Zur Verdeutlichung zeigt Figur 4 beispielhaft eine Bildmatrix 16 mit einer Vielzahl von Bildpunkten oder Pixeln Pᵢ. In Figur 4 ist schraffiert ein einem bestimmten sogenannten lokalen Operator entsprechendes Filteroperationsfenster 17 dargestellt, welches über einen aktuell zu bearbeitenden Bildpunkt P₀ gelegt ist und anschließend über die gesamte Bildmatrix 16 geschoben wird. Durch die Anwendung derartiger lokaler Operatoren können Aussagen über die direkte Bildpunktnachbarschaft eines Pixels getroffen werden, d.h. bei dem in Figur 4 dargestellten Fall werden durch die Anwendung eines derartigen lokalen Operators, insbesondere eines Kantenoperators, Aussagen über das Verhältnis der dem Pixel P₀ zugeordneten Grauwertstufe zu den den benachbarten Pixeln P₁-P₈ zugeordneten Grauwertstufen bzw. Helligkeitsstufen erhalten.

Der aufgrund seiner guten Ergebnisse bei der Mehrzahl der Anwendungen und seines im Rahmen gehaltenen Laufzeitverhaltens gebräuchlichste Kantenfilteroperator ist der sogenannte Sobel-Operator, nach dessen Anwendung Aussagen über die Graustufengradienten der einzelnen Bildpunkte zu ihren benachbarten Bildpunkten erhalten werden. Die durch diese Kantenfilterung berechneten Gradienten werden in dem Rechner 10 abgespeichert, wobei die Gradienten insbesondere getrennt von den ursprünglichen digitalen Bilddaten 90 zwischengespeichert werden. Im Sinne eines optimalen Laufzeitverhaltens empfiehlt es sich, die benachbarten Bildpunkte eines zu bearbeitenden Bildpunkts der Bildmatrix mit Zeigern (Pointern) zu adressieren. Die Berechnung der Gradienten durch den Sobel-Filteralgorithmus erfolgt in drei Schritten. Zunächst werden die Werte der zu einem zu bearbeitenden Bildpunkt benachbart angeordneten Bildpunkte mit den Koeffizienten des Sobel-Filterkerns in horizontaler und vertikaler Suchrichtung multipliziert. Anschließend werden die Summen jeweils in horizontaler und vertikaler Suchrichtung addiert und die Beträge der beiden in dem vorhergehenden Schritt berechneten Summen schließlich addiert.

Wie bereits zuvor erläutert worden ist, wird das somit kantengefilterte Gradientenbild zur weiteren Verarbeitung binärisiert (vgl. Schritt 202 in Figur 3). Jeder Punkt der gefilterten Bildmatrix wird zu diesem Zweck mit einem Schwellenwert verglichen. Liegt der Gradient oberhalb dieses Schwellenwerts, so ist er informationsbehaftet; liegt er hingegen unterhalb des Schwellenwerts, ist er nicht informationsbehaftet. Somit wird ein binärisiertes Ausgangsbild mit entweder gesetzten oder nicht gesetzten Pixeln erhalten. Der zugrundegelegte Schwellenwert wird anhand des Wertebereichs der einzelnen Gradienten, d.h. abhängig von dem Abstand zwischen dem größten und kleinsten Gradienten, festgelegt. Bei der Verwendung eines statischen Schwellenwerts kann das Problem auftreten, daß bei einem zu hoch gewählten Schwellenwert Informationen verloren gehen, während bei einem zu niedrigen Schwellenwert das Bild verrauscht. Des weiteren kommen in kontrastarmen Regionen des Bildes die Konturen schlechter zur Geltung als in den kontrastreichen Zonen. Daher ist die Verwendung eines dynamischen Schwellenwerts vorteilhaft, der auf der Grundlage des Gradientenbildes für jeden Bildpunkt einzeln berechnet wird. Zur Berechnung des dynamischen Schwellenwerts werden die Mittelwerte der zu einem zu bearbeitenden Pixel benachbarten Pixel aus dem Gradientenbild ermittelt und mit ¼ des Gradienten-Wertebereichs addiert. Die Hälfte dieses Wertes ergibt schließlich den dynamischen Schwellenwert. Verringert sich beispielsweise der Mittelwert einer Region wegen Unterbelichtung, verringert sich entsprechend auch der Schwellenwert, so daß stets gute Ergebnisse erzielt werden können.

Die im Schritt 202 (vgl. Figur 3) durchgeführte Binärisierung hat eine Datenreduzierung zur Folge, da im Gegensatz zum ursprünglichen Graustufenbild (mit beispielsweise 8 Bit pro Pixel) jeder Bildpunkt nach der Binärisierung nur noch mit einem Bit (entsprechend einer schwarzen oder weißen Einfärbung) gespeichert werden muß.

Der zuvor beschriebene Sobel-Filteralgorithmus hat die Folge, daß die mit seiner Hilfe herausgearbeiteten Kanten sehr dick dargestellt werden. Durch den in Figur 3 dargestellten Schritt der Konturenverdünnung 203 sollen daher diese Kanten verdünnt werden. Dies kann beispielsweise durch die sogenannte Erosion erfolgen. Die Erosion bewirkt, daß die durch die Kantenfilterung herausgearbeiteten Objekte oder Strukturen geschrumpft werden, indem die durch die Gradientenoperation erhaltenen und kräftig dargestellten Kanten durch einen Vergleich mit den Nachbar- und Hintergrundpixeln verjüngt werden. Zu diesem Zweck wird beispielsweise der Wert eines aktuell zu bearbeitenden Objektpixels mit den Werten der benachbarten Pixels verglichen. Ist der Wert eines der Nachbarpixel kleiner als der Wert des Objektpixels, kann es sich bei dem Nachbarpixel nur um den Hintergrund handeln (sofern ein Binärbild zugrundegelegt wird). Um das Objekt schrumpfen zu lassen, wird daher der Wert des Objektpixels auf den Hintergrundwert gesetzt. Ein positiver Aspekt der Erosion ist auch die Unterdrückung von gegebenenfalls in einem Binärbild enthaltenen Rauschanteilen.

Die durch die Erosion durchgeführte Verdünnung der Konturbereiche führt jedoch zu dem Problem, daß unzureichend detektierte Kanten noch weiter unterdrückt werden und somit Lücken in den Konturen entstehen können. Dieses Problem kann dadurch gelöst werden, daß zusätzlich eine Differenzbildung des durch die Erosion entstandenen Bildes mit dem kantengefilterten Binärbild durchgeführt wird, um somit verdünnte Konturenbereiche zu erhalten, die auf jeden Fall vollständig sind.

Nach Abschluß der Segmentierung 200, d.h. nach Herausarbeiten der Kanten bzw. Konturen des von der Kamera 8 aufgenommenen Bildes des jeweiligen Prüflings 6, müssen nachfolgend Rückschlüsse auf den eigentlichen Bildinhalt anhand der somit erhaltenen geometrischen Form der Konturen gezogen werden. D.h. aus der durch die digitale Bildverarbeitung erhaltene Bildmatrix müssen die relevanten Informationen zu Merkmalen zusammengefaßt werden, um aus ihnen Rückschlüsse auf den Bildinhalt ziehen zu können (Merkmalsextraktion). Die Merkmalsextraktion 300 kann im Prinzip in zwei Schritten ablaufen. Zunächst wird eine Kantenverfolgung durchgeführt, um ausgehend von einem Startpixel die zusammenhängenden Nachbarpixel zu ermitteln. Aus den somit ermittelten Konturfragmenten werden anschließend diejenigen zusammengefügt, die offensichtlich zueinandergehören.

Zur Kantenverfolgung eignet sich beispielsweise der Kettencode nach Freeman, der nachfolgend unter Bezugnahme auf Figur 5 erläutert werden soll. Wie in Figur 5a) gezeigt ist, wird dabei ausgehend von dem Startpixel 18 in Spalte 5, Zeile 9 der Bildmatrix 16 die Nachbarschaft nach gesetzten Nachbarpixeln untersucht. Wurde ein gesetztes Nachbarpixel aufgefunden, wird die Position des Startpixels 18 und die Richtung zum aufgefundenen gesetzten Nachbarpixel gespeichert und anschließend von dem gerade gefundenen Nachbarpixel aus weitergesucht. In Figur 5a) ist dabei beispielhaft der Vorgang zum Auffinden einer Objektberandung innerhalb einer Bildmatrix 16 dargestellt. Als Schlüssel zur Codierung dient die in Figur 5b) dargestellte Kettencode-"Windrose", wobei ausgehend von dem Startpixel jeder Richtung ein bestimmter Wert zugeordnet ist. Wird somit beispielsweise ausgehend von einem gesetzten Startpixel ein unmittelbar horizontal rechts von dem Startpixel gesetztes Nachbarpixel aufgefunden, wird der Wert "0" gespeichert. Für ein unmittelbar vertikal oberhalb des Startpixels gesetztes Nachbarpixel wird hingegen der Wert "2" gespeichert usw. In Figur 5c) ist entsprechend der in Figur 5a) dargestellten Kontur bzw. Kantenverfolgung der Speicherinhalt dargestellt, wobei die einzelnen gespeicherten Werte jeweils die dem Konturenverlauf entsprechende Richtung von einem Ausgangspixel zu einem gesetzten Nachbarpixel bezeichnen. Aus den Angaben "Ausgangspixel", "Endpixel" und den "Richtungen zu den Nachbarpixeln" ist die gefundene Kante anschließend reproduzierbar.

Nachdem nun mit Hilfe des Schritts 300 (vgl. Figur 3) die in dem aufgenommenen Bild enthaltenen Konturen bzw. Konturenfragmente ermittelt worden sind, müssen die offensichtlich zusammengehörenden Konturfragmente noch zusammengefügt werden. Liegt beispielsweise der Startwert einer Kante unmittelbar neben dem Endwert einer weiteren Kante, kann davon ausgegangen werden, daß diese beiden Kanten eine gemeinsame Kontur bilden. Daher wird die Umgebung jedes Endwerts einer Kante nach einer anschließenden Kante gesucht, um somit aufgefundene Konturfragmente zusammenfügen zu können. Des weiteren können während dieses Schritts derartige Kanten gelöscht werden, die bei der nachfolgenden Analyse der Informationen nicht mehr benötigt werden, wie z.B. als Objektberandung klassifizierte Fragmente, welche in der Bildmatrix hinter der letzten als Faden klassifizierte Kante ihren Startwert haben. Damit können Farbmarkierungen auf der Hülse, welche einen Einfluß auf die Bewertung haben könnten, eliminiert werden.

Nach der Merkmalsextraktion 300 schließt sich die Analyse 400 an, um schließlich die Aussage 500 über den Hülsenstatus bzw. Füllgrad der untersuchten Spinnkopshülse 6 zu erhalten. Zu diesem Zweck werden die extrahierten Merkmale spezifisch mit den erwarteten Merkmalen einer abstrakten Modellvorstellung verglichen. Alternativ oder zusätzlich können einige Konturen mit den Konturen einer vorliegenden Lernkopshülse verglichen werden. Eine als Gerade klassifizierte geschwungene Rundung kennzeichnet beispielsweise dabei den Fadenkörper einer Restbefüllung. Zusätzlich kennzeichnet eine gefundene als Faden klassifizierte Berandung die letzte Wicklung des Fadenkörpers. Eine Hülsenberandung muß im Gegensatz zu einer Fadenkörperberandung eine Gerade sein. Sind zusätzlich keine als Faden klassifizierte Berandungen extrahiert, handelt es sich demnach um eine leere Hülse. Sind hingegen entsprechende als Faden klassifizierte Berandungen zusätzlich zu einer geraden Hülsenberandung vorhanden, muß es sich um eine Hülse mit Restfäden handeln.

Die abschließende Analyse 400 liefert somit zuverlässig eine Aussage darüber, ob es sich bei dem untersuchten Prüfling 6 tatsächlich um eine leere Hülse, um eine Hülse mit nicht verwertbaren Fadenresten oder um eine Hülse mit einem wiederverwertbaren Wicklungsrest handelt, so daß - wie bereits zuvor erläutert worden ist - die somit erhaltenen Informationen des Rechners 10 zur Steuerung der Transportrichtung der entsprechenden Spinnkopshülse 6 verwendet werden können.

Abschließend sei erwähnt, daß die zuvor beschriebene Vorrichtung bzw. daß zuvor beschriebene Verfahren zur Erkennung von Fadenresten auf Spinnkopshülsen selbstverständlich auch dazu verwendet werden können, um die Spinnkopskontur überprüfen und damit Ungleichmäßigkeiten auf der Bewicklungsoberfläche erkennen zu können.

## Patentansprüche

1. Verfahren zur Erkennung von Fadenresten auf Spinnkopshülsen (6), umfassend die Schritte
- Bestrahlen einer zu untersuchenden Spinnkopshülse mit Licht,
- Erfassen des von der Spinnkopshülse reflektierten Lichts,
- Erzeugen von Bildsignalen der Spinnkopshülse anhand des erfaßten reflektierten Lichts, und
- Auswerten der erzeugten Bildsignale, um das Vorhandensein von Fadenresten auf der Spinnkopshülse zu beurteilen,
**dadurch gekennzeichnet,**
**daß** aus dem von der Spinnkopshülse (6) reflektierten Licht eine Flächenaufnahme des bestrahlten Teiles der Spinnkopshülse erzeugt wird,
**daß** aus den erhaltenen Bildsignalen digitale Bilddaten (90) erzeugt werden, und
**daß** die digitalen Bilddaten (90) einer Kantenfilterung unterzogen werden, um in der den digitalen Bilddaten (90) entsprechenden Bildmatrix durch Helligkeitsübergänge gebildete Kanten herauszuarbeiten, anhand derer das Vorhandensein von Fadenresten auf der Spinnkopshülse (6) beurteilt wird.

2. Verfahren nach Anspruch 1,
**dadurch gekennzeichnet,**
**daß** wenigstens der Teil der Spinnkopshülse (6), der hinsichtlich der Fadenreste geprüft werden soll, mittels einer stationären Lichtquelle bestrahlt wird.

3. Verfahren nach Anspruch 1,
**dadurch gekennzeichnet,**
**daß** die Spinnkopshülse (6) mit diffusem Licht bestrahlt wird.

4. Verfahren nach einem der Ansprüche 1 bis 3,
**dadurch gekennzeichnet,**
**daß** das von der Spinnkopshülse (6) reflektierte Licht während der Transportbewegung der Spinnkopshülse (6) erfaßt wird.

5. Verfahren nach einem der vorhergehenden Ansprüche,
**dadurch gekennzeichnet,**
**daß** eine Aussage darüber getroffen wird, ob es sich bei der untersuchten Spinnkopshülse (6) um eine leere Spinnkopshülse, eine Spinnkopshülse mit einem wiederverwertbaren Fadenrest oder eine Spinnkopshülse mit einem nicht wiederverwertbaren Fadenrest handelt.

6. Verfahren nach einem der vorhergehenden Ansprüche,
**dadurch gekennzeichnet,**
**daß** das Auswerten der Bilddaten rechnergestützt durchgeführt wird, wobei die digitalen Bilddaten (90) in einem Auswerterechner (10) pixelweise gespeichert werden.

7. Verfahren nach einem der vorhergehenden Ansprüche,
**dadurch gekennzeichnet,**
**daß** die digitalen Bilddaten (90) vor der Durchführung der Kantenfilterung (201) einer Kontrasterhöhung (100) unterzogen werden, indem die den digitalen Bilddaten (90) entsprechende Bildmatrix (16) pixelweise quadriert und die quadrierte Bildmatrix mit der ursprünglichen Bildmatrix addiert wird.

8. Verfahren nach einem der vorhergehenden Ansprüche,
**dadurch gekennzeichnet,**
**daß** die Kantenfilterung (201) mit Hilfe des Sobel-Filteralgorithmus und anschließender Binärisierung (202) durchgeführt wird, um die in den digitalen Bilddaten (90) enthaltenen Kanten herauszuarbeiten.

9. Verfahren nach Anspruch 7,
**dadurch gekennzeichnet,**
**daß** die durch die Kantenfilterung erhaltenen Kanten verdünnt werden (203), indem die den digitalen Bilddaten (90) entsprechende binärisierte Bildmatrix (16) nach der Kantenfilterung (201) und Binärisierung (202) einer Erosion unterzogen und die Differenz zwischen der durch die Erosion erhaltenen Bildmatrix und der kantengefilterten binärisierten Bildmatrix gebildet wird.

10. Verfahren nach einem der vorhergehenden Ansprüche,
**dadurch gekennzeichnet,**
**daß** nach der Kantenfilterung die gefilterte Bildmatrix (16) einer Kantenverfolgung (300) unterzogen wird, um in der Bildmatrix zusammenhängende Objektkonturen zu ermitteln.

11. Verfahren nach Anspruch 10,
**dadurch gekennzeichnet,**
**daß** die Kantenverfolgung (300) durch Anwendung des Freeman-Kettencodes durchgeführt wird.

12. Verfahren nach einem der vorhergehenden Ansprüche,
**dadurch gekennzeichnet,**
**daß** auch Aussagen über die Beschaffenheit der Kontur der untersuchten Spinnkopshülse (6) getroffen werden, um Ungleichmäßigkeiten auf der Bewicklungsoberfläche der Spinnkopshülse (6) festzustellen.

13. Vorrichtung zur Erkennung von Fadenresten auf Spinnkopshülsen (6),
- mit mindestens einer Lichtquelle (7) zur Bestrahlung einer zu untersuchenden Spinnkopshülse mit Licht,
- mit einer Bildaufnahmeeinrichtung (8,9) zum Erfassen des von der Spinnkopshülse reflektierten Lichts,
- mit Auswertemitteln zum Auswerten von durch die Bildaufnahmeeinrichtung erzeugten Bildsignalen, um das Vorhandensein von Fadenresten auf der Spinnkopshülse zu beurteilen,
**dadurch gekennzeichnet,**
**daß** die Bildaufnahmeeinrichtung (8,9) so eingerichtet ist, daß sie anhand des von der Spinnkopshülse (6) reflektierenden Lichtes eine Flächenaufnahme des bestrahlten Teiles der Spinnkopshülse erzeugt und aus den erhaltenen Bildsignalen digitale Bilddaten 90 erstellt und daß eine Bildauswertung (10) vorhanden ist, durch die die digitalen Bilddaten (90) einer Kantenfilterung unterzogen werden, um in der den digitalen Bilddaten (90) entsprechenden Bildmatrix durch Helligkeitsübergänge gebildete Kanten herauszuarbeiten, anhand derer das Vorhandensein von Fadenresten auf der Spinnkopshülse (6) beurteilt wird.

14. Vorrichtung nach Anspruch 13,
**dadurch gekennzeichnet, daß** die Lichtquelle (7) stationär angebracht und derart ausgebildet ist, daß wenigstens der Teil der Spinnkopshülse (6) bestrahlt wird, der hinsichtlich der Fadenreste geprüft werden soll.

15. Vorrichtung nach Anspruch 13,
**dadurch gekennzeichnet,**
**daß** die mindestens eine Lichtquelle (7) die zu untersuchende Spinnkopshülse (6) mit diffusem Licht bestrahlt.

16. Vorrichtung nach Anspruch 13 bis 15,
**dadurch gekennzeichnet,**
**daß** die mindestens eine Lichtquelle (7) mehrere ultrahelle Leuchtdioden (13-15) umfaßt, die Licht in unterschiedlichen Farben emittieren und matrixartig gemischt angeordnet sind.

17. Vorrichtung nach Anspruch 13 bis 15,
**dadurch gekennzeichnet,**
**daß** die mindestens eine Lichtquelle (7) weiße Leuchtdioden umfaßt.

18. Vorrichtung nach einem der Ansprüche 13 bis 17,
**dadurch gekennzeichnet,**
**daß** zwischen der mindestens einen Lichtquelle (7) und der zu untersuchenden Spinnkopshülse (6) ein Diffusor (18) zur Steuerung des von der Lichtquelle (7) abgegebenen Lichts angeordnet ist.

19. Vorrichtung nach einem der Ansprüche 13-18,
**dadurch gekennzeichnet,**
**daß** seitlich von der zu untersuchenden Spinnkopshülse (6) mehrere Lichtquellen (7), die jeweils eine Vielzahl von matrixartig angeordneten Leuchtdioden (13-15) aufweisen, derart angeordnet sind, daß eine Totalreflexion des von ihnen abgestrahlten Lichts zu der Bildaufnahmeeinrichtung (8, 9) hin vermieden wird.

20. Vorrichtung nach einem der Ansprüche 13-19,
**dadurch gekennzeichnet,**
**daß** die Bildaufnahmeeinrichtung (8, 9) eine CCD-Videokamera (8) mit nachgeschaltetem Bildwandler (9) umfaßt, wobei der Bildwandler (9) das von der CCD-Videokamera (8) gelieferte Bildsignal in die digitalen Bilddaten (90) umsetzt.

21. Vorrichtung nach Anspruch 20,
**dadurch gekennzeichnet,**
**daß** die CCD-Videokamera (8) eine Farbkamera ist, wobei der nachgeschaltete Bildwandler (9) das von der Farbkamera gelieferte Bildsignal in unterschiedlichen Graustufen entsprechende digitale Bilddaten (90) umwandelt.

22. Vorrichtung nach Anspruch 20,
**dadurch gekennzeichnet,**
**daß** die CCD-Videokamera eine Schwarz-Weiß-Kamera ist, die ein unterschiedlichen Graustufen entsprechendes Bildsignal liefert.

23. Vorrichtung nach einem der Ansprüche 19-22,
**dadurch gekennzeichnet,**
**daß** die CCD-Videokamera (8) um 90° um ihre optische Achse gedreht angeordnet ist und das von der Spinnkopshülse (6) reflektierte Licht erfaßt.

24. Vorrichtung nach einem der Ansprüche 13-19,
**dadurch gekennzeichnet,**
**daß** die Bildaufnahmeeinrichtung (8) einen digitalen Fotoapparat zur Erfassung des von der Spinnkopshülse (6) reflektierten Lichts umfaßt, wobei der digitale Fotoapparat die digitalen Bilddaten (90) erzeugt und den Auswertemitteln (10) zuführt.

25. Vorrichtung nach einem der Ansprüche 13-24,
**dadurch gekennzeichnet,**
**daß** die Bildaufnahmeeinrichtung (8) optische Verzerrmittel umfaßt, welche das Längen-Breiten Verhältnis der untersuchten Spinnkopshülse (6) an das Aufnahmefenster der Bildaufnahmeeinrichtung (8,9) anpassen.

26. Vorrichtung nach Anspruch 25,
**dadurch gekennzeichnet,**
**daß** die optischen Verzerrmittel einen Hohlspiegel und/oder eine Zylinderoptik umfassen.

27. Vorrichtung nach einem der Ansprüche 13-26,
**dadurch gekennzeichnet,**
**daß** die Auswertemittel (10) derart ausgestaltet sind, daß sie anhand der durch die Kantenfilterung herausgearbeiteten Kanten Informationen darüber erzeugen, ob es sich bei der untersuchten Spinnkopshülse (6) um eine Hülse ohne Fadenrest, eine Hülse mit wiederverwertbarem Fadenrest oder eine Hülse mit einem nicht wiederverwertbaren Fadenrest handelt.

28. Vorrichtung nach einem der Ansprüche 13-27,
**dadurch gekennzeichnet,**
**daß** die Auswertemittel (10) einen Rechner umfassen, in dem die digitalen Bilddaten (90) der Bildaufnahmeeinrichtung (8,9) für eine digitale Bildverarbeitung vektoriell gespeichert sind.

29. Vorrichtung nach einem der Ansprüche 13-28,
**dadurch gekennzeichnet,**
**daß** die Auswertemittel (10) derart ausgestaltet sind, daß sie die den digitalen Bilddaten (90) der Bildaufnahmeeinrichtung (8, 9) entsprechende Bildmatrix pixelweise quadrieren und die quadrierte Bildmatrix mit der ursprünglichen Bildmatrix addieren, um den Kontrast des entsprechenden Bildes zu erhöhen.

30. Vorrichtung nach einem der Ansprüche 13-29,
**dadurch gekennzeichnet,**
**daß** die Auswertemittel (10) so ausgestaltet sind, daß sie die Kantenfilterung der den digitalen Bilddaten (90) entsprechenden Bildmatrix (16) durch Anwendung des Sobel-Filteralgorithmus auf die Bildmatrix (16) durchführen.

31. Vorrichtung nach einem der Ansprüche 13-30,
**dadurch gekennzeichnet,**
**daß** die Auswertemittel (10) derart ausgestaltet sind, daß sie die in Folge der Kantenfilterung erhaltene Bildmatrix (16) binärisieren und einer Erosion mit anschließender Differenzbildung zwischen der durch die Erosion erhaltene Bildmatrix und der binärisierten Bildmatrix unterziehen, um die in der Bildmatrix (16) enthaltenen Kanten zu verdünnen.

32. Vorrichtung nach einem der Ansprüche 13-31,
**dadurch gekennzeichnet,**
**daß** die Auswertemittel (10) derart ausgestaltet sind, daß sie mit Hilfe eines Kantenverfolgungsverfahrens durch Anwendung des Freeman-Kettencodes die in der gefilterten Bildmatrix enthaltenen Konturkanten ermitteln.

## Claims

1. Method for detecting yarn waste on bobbins (6), comprising the steps
- irradiating a bobbin to be investigated with light,
- capturing the light reflected by the bobbin,
- producing image signals of the bobbin with the aid of the reflected light captured, and
- evaluating the image signals produced to assess the presence of yarn waste on the bobbin,
**characterised in that** a surface photograph of the irradiated portion of the bobbin is produced from the light reflected by the bobbin (6), **in that** digital image data (90) is produced from the image signals obtained, and **in that** the digital image data (90) is subjected to edge filtering to bring out edges formed in the image matrix corresponding to the digital image data (90) by brightness blendings, with the aid of which the presence of yarn waste on the bobbin (6) is assessed.

2. Method according to claim 1, **characterised in that** at least the portion of the bobbin (6) to be tested with regard to yarn waste is irradiated by means of a stationary light source.

3. Method according to claim 1, **characterised in that** the bobbin (6) is irradiated with diffuse light.

4. Method according to any of claims 1 to 3, **characterised in that** the light reflected by the bobbin (6) is detected during the conveying movement of the bobbin (6).

5. Method according to any of the preceding claims, **characterised in that** a report is made as to whether the bobbin (6) investigated is an empty bobbin, a bobbin with reusable yarn waste or a bobbin with non-reusable yarn waste.

6. Method according to any of the preceding claims, **characterised in that** evaluation of the image data is computer assisted, the digital image data (90) being stored pixel-by-pixel in an evaluating computer (10).

7. Method according to any of the preceding claims, **characterised in that** the digital image data (90) is subjected to an increase in contrast (100) before the edge filtering (201) is carried out, **in that** the image matrix (16) corresponding to the digital image data (90) is squared pixel-by-pixel and the squared image matrix added to the original image matrix.

8. Method according to any of the preceding claims, **characterised in that** the edge filtering (201) is carried out with the aid of the Sobel filter algorithm and subsequent binarisation (202) to bring out the edges contained in the digital image data (90).

9. Method according to claim 7, **characterised in that** the edges obtained by edge filtering are weakened (203), **in that** the binarised image matrix (16) corresponding to the digital image data (90) is subjected to an erosion after edge filtering (201) and binarisation (202) and the difference between the image matrix obtained by the erosion and the edge filtered, binarised image matrix is formed.

10. Method according to any of the preceding claims, **characterised in that** after edge filtering the filtered image matrix (16) is subjected to edge tracking (300) to ascertain connected object contours in the image matrix.

11. Method according to claim 10, **characterised in that** edge tracking is carried out by applying the Freeman chain code.

12. Method according to any of the preceding claims, **characterised in that** reports are also made on the nature of the contour of the bobbin (6) investigated in order to assess irregularities on the winding surface of the bobbin (6).

13. Device for detecting yarn waste on bobbins (6), with at least one light source (7) for irradiating a bobbin to be investigated with light, with a camera (8, 9) for capturing the light reflected by the bobbin, with evaluation means for evaluating image signals produced by the camera in order to assess the presence of yarn waste on the bobbin, **characterised in that** the camera (8, 9) is arranged in such a way that it produces a surface photograph of the irradiated portion of the bobbin with the aid of the light reflected by the bobbin (6) and creates digital image data (90) from the image signals obtained, and **in that** there is an image evaluation (10) by which the digital image data (90) is subjected to edge filtering to bring out edges formed in the image matrix corresponding to the digital image data (90) by brightness blendings, with the aid of which the presence of yarn waste on the bobbin (6) is assessed.

14. Device according to claim 13, **characterised in that** the light source (7) is stationary and is designed in such a way that at least the portion of the bobbin (6) which is to be examined with respect to yarn waste is irradiated.

15. Device according to claim 13, **characterised in that** the at least one light source (7) irradiates the bobbin (6) to be investigated with diffuse light.

16. Device according to claim 13 to 15, **characterised in that** the at least one light source (7) comprises a plurality of ultra-bright light-emitting diodes (13 to 15) emitting light in different colours and arranged in a mixed matrix-like manner.

17. Device according to claim 13 to 15, **characterised in that** the at least one light source (7) comprises white light-emitting diodes.

18. Device according to any of claims 13 to 17, **characterised in that** a diffuser (18) for controlling the light emitted by the light source (7) is arranged between the at least one light source (7) and the bobbin (6) to be investigated.

19. Device according to any of claims 13 to 18, **characterised in that** a plurality of light sources (7), each having a number of light-emitting diodes (13 to 15) arranged in a matrix-like manner, are arranged to the side of the bobbin (6) to be investigated in such a way that total reflection of the light radiated thereby to the camera (8, 9) is avoided.

20. Device according to any of claims 13 to 19, **characterised in that** the camera (8, 9) comprises a CCD video camera (8) with image converter (9) connected downstream, the image converter (9) converting the image signal supplied by the CCD video camera (8) into the digital image data (90).

21. Device according to claim 20, **characterised in that** the CCD video camera (8) is a colour camera, the image converter (9) connected downstream converting the image signal supplied by the colour camera into digital image data (90) corresponding to different grey stages.

22. Device according to claim 20, **characterised in that** the CCD video camera is a black and white camera supplying an image signal corresponding to different grey stages.

23. Device according to any of claims 19 to 22, **characterised in that** the CCD video camera (8) is arranged so as to be rotated about its optical axis by 90° and captures the light reflected by the bobbin (6).

24. Device according to any of claims 13 to 19, **characterised in that** the camera (8) comprises a digital camera for detecting the light reflected by the bobbin (6), the digital camera producing the digital image data (90) and supplying it to the evaluation means (10).

25. Device according to any of claims 13 to 24, **characterised in that** the camera (8) comprises optical distortion means adapting the length/width ratio of the bobbin (6) investigated to the shutter of the camera (8, 9).

26. Device according to claim 25, **characterised in that** the optical distortion means comprise a concave mirror and/or a cylindrical lens.

27. Device according to any of claims 13 to 26, **characterised in that** the evaluation means (10) is designed in such a way that with the aid of the edges brought out by edge filtering it produces information on whether the investigated bobbin (6) is an empty bobbin without yarn waste, an empty bobbin with reusable yarn waste or an empty bobbin with non-reusable yarn waste.

28. Device according to any of claims 13 to 27, **characterised in that** the evaluation means (10) comprises a computer in which the digital image data (90) of the camera (8, 9) is stored in the manner of a vector for digital image processing.

29. Device according to any of claims 13 to 28, **characterised in that** the evaluation means (10) is designed in such a way that it squares the image matrix corresponding to the digital image data (90) of the camera (8, 9) pixel-by-pixel and the squared image data is added to the original image matrix to increase the contrast of the corresponding image.

30. Device according to any of claims 13 to 29, **characterised in that** the evaluation means (10) is designed in such a way that it performs the edge filtering of the image matrix (16) corresponding to the digital image data (90) by applying the Sobel filter algorithm to the image matrix (16).

31. Device according to any of claims 13 to 30, **characterised in that** the evaluation means (10) is designed in such a way that it binarises the image matrix (16) obtained as a result of edge filtering and subjects it to an erosion with subsequent differentiation between the image matrix obtained by the erosion and the binarised image matrix to weaken the edges contained in the image matrix (16).

32. Device according to any of claims 13 to 31, **characterised in that** the evaluation means (10) is designed in such a way that it ascertains the contour edges contained in the filtered image matrix with the aid of an edge tracking method by applying the Freeman chain code.

## Revendications

1. Procédé destiné à détecter le reste de fil sur les bobines de filature (6), comprenant les étapes suivantes :
- exposition d'une bobine de filature à analyser à la lumière,
- évaluation de la lumière réfléchie par la bobine de filature,
- génération des signaux d'image de la bobine de filature à partir de la lumière réfléchie évaluée et
- exploitation des signaux d'image produits, permettant de juger de la présence de reste de fil sur la bobine de filature, **caractérisé en ce que**
une prise de vue de la surface de la partie exposée de la bobine de filature est produite à partir de la lumière réfléchie par la bobine de filature (6),
les images numériques à niveau de gris ou données-image numériques (90) sont générées à partir des signaux d'image obtenus et
les images numériques à niveau de gris ou données-image numériques (90) sont soumises à un filtrage des arêtes, afin de dégrossir les arêtes formées par les passages des niveaux de clarté dans la matrice d'image correspondant aux images numériques à niveau de gris (90), à partir desquelles l'existence de reste de fils sur la bobine de filature (6) est déterminée.

2. Procédé selon la revendication 1, **caractérisé en ce que**
au moins la partie de la bobine de filature (6), qui doit être vérifiée en termes de reste de fil, soit éclairée au moyen d'une source lumineuse stationnaire.

3. Procédé selon la revendication 1, **caractérisé en ce que**
la bobine de filature (6) est éclairée à l'aide d'une lumière diffuse.

4. Procédé selon l'une quelconque des revendications 1 à 3, **caractérisé en ce que**
la lumière réfléchie par la bobine de filature (6) durant le mouvement de transport de la bobine de filature (6) est évaluée.

5. Procédé selon l'une quelconque des revendications précédentes, **caractérisé en ce que**
on obtient des données relatives au fait que la bobine de filature analysée (6) soit une bobine de filature vide, une bobine de filature comportant des restes de fils réutilisables ou une bobine de filature avec des restes de fils non réutilisables.

6. Procédé selon l'une quelconque des revendications précédentes, **caractérisé en ce que**
l'exploitation des images à niveau de gris est exécutée à l'aide d'un ordinateur, dans lequel les images numériques à niveau de gris (90) sont enregistrées sous forme de pixels au sein d'un ordinateur d'évaluation (10).

7. Procédé selon l'une quelconque des revendications précédentes, **caractérisé en ce que**
les images numériques à niveau de gris (90) sont soumises à une augmentation du contraste (100) avant de procéder au filtrage des arêtes (201), la matrice de l'image (16) correspondant aux images numériques à niveau de gris (90) étant élevée au carré sous forme de pixels et la matrice de l'image élevée au carré étant ajoutée à la matrice de l'image originelle.

8. Procédé selon l'une quelconque des revendications précédentes, **caractérisé en ce que**
le filtrage des arêtes (201) est réalisé à l'aide de l'algorithme du filtre de Sobel et de la binarisation consécutive (202), afin de dégrossir les arêtes obtenues dans les images numériques à niveau de gris (90).

9. Procédé selon la revendication 7, **caractérisé en ce que**
les arêtes obtenues au moyen du filtrage des arêtes sont affinées (203), la matrice de l'image (16) binarisée correspondant aux images numériques à niveau de gris (90) étant soumise à une érosion au terme du filtrage des arêtes (201) et de la binarisation (202) et la différence entre la matrice de l'image obtenue par l'érosion et la matrice de l'image binarisée filtrée pour la détection des arêtes étant formée.

10. Procédé selon l'une quelconque des revendications précédentes, **caractérisé en ce que**
la matrice de l'image filtrée (16) est soumise après le filtrage des arêtes au suivi des arêtes (300), afin de déterminer les contours des objets regroupés au sein de la matrice de l'image.

11. Procédé selon la revendication 10, **caractérisé en ce que**
le suivi des arêtes (300) est réalisé à l'aide de l'application du code en chaîne de Freeman.

12. Procédé selon l'une quelconque des revendications précédentes, **caractérisé en ce que**
on recueille également des données relatives à l'état du contour de la bobine de filature analysée (6), afin de constater les irrégularités sur la surface d'enroulement de la bobine de filature (6).

13. Dispositif destiné à détecter le reste de fil sur les bobines de filature (6), comportant:
- au moins une source lumineuse (7) pour éclairer la bobine de filature à analyser avec de la lumière,
- une installation de prise de vues (8, 9) pour évaluer la lumière réfléchie par la bobine de filature,
- des moyens d'exploitation pour exploiter les signaux d'image produits au moyen du dispositif de prise de vues, afin d'évaluer la présence de reste de fil sur les bobines de filature,
**caractérisé en ce que** le dispositif de prise de vues (8, 9) est installé de manière à générer une prise de vue de la surface de la partie exposée de la bobine de filature à partir de la lumière réfléchie par la bobine de filature (6), et à produire des images numériques à niveau de gris (90) à partir des signaux d'images obtenus et de telle sorte que l'exploitation de l'image (10) existe, exploitation grâce à laquelle les images numériques à niveau de gris (90) sont soumises à un filtrage des arêtes, permettant de dégrossir les arêtes formées par le passage des niveaux de clarté au sein de la matrice de l'image correspondant aux images numériques à niveau de gris (90), à partir de laquelle exploitation la présence de reste de fil sur la bobine de filature (6) est estimée.

14. Dispositif selon la revendication 13, **caractérisé en ce que**
la source lumineuse (7) est fixée de manière stationnaire et est formée de telle sorte qu'au moins la partie de la bobine de filature (6) soit éclairée, laquelle partie doit être examinée en termes de reste de fil.

15. Dispositif selon la revendication 13, **caractérisé en ce que**
ladite au moins source lumineuse (7) éclaire la bobine de filature (6) à examiner à l'aide de lumière diffuse.

16. Dispositif selon la revendication 13 à 15, **caractérisé en ce que**
ladite au moins source lumineuse (7) comprend plusieurs diodes lumineuses ultra claires (13 à 15), qui émettent la lumière dans diverses couleurs et qui sont agencées de façon mélangée sous forme de matrice.

17. Dispositif selon la revendication 13 à 15, **caractérisé en ce que**
ladite au moins source lumineuse (7) comprend des diodes lumineuses blanches.

18. Dispositif selon la revendication 13 à 17, **caractérisé en ce que**
un diffuseur (18) permettant de commander la lumière déposée par la source lumineuse (7) est agencé entre ladite au moins source lumineuse (7) et la bobine de filature (6) à examiner.

19. Dispositif selon l'une quelconque des revendications 13 à 18, **caractérisé en ce que**
plusieurs sources lumineuses (7), qui, à chaque fois, présentent une multitude de diodes lumineuses (13 à 15) agencées sous forme de matrice, sont agencées de façon latérale par rapport à la bobine de filature à examiner (6), de telle sorte qu'une réflexion intégrale de la lumière émise par celles-ci vers le dispositif de prise de vues (8, 9) soit évitée.

20. Dispositif selon l'une quelconque des revendications de 13 à 19, **caractérisé en ce que**
le dispositif de prise de vues (8, 9) comprend une vidéo caméra à dispositif à transfert de charge (8) raccordé en aval à un convertisseur d'image (9), dans lequel le convertisseur d'image (9) convertit le signal d'image délivré par la caméra vidéo à dispositif à transfert de charge (8) en des images numériques à niveau de gris (90).

21. Dispositif selon la revendication 20, **caractérisé en ce que**
la caméra vidéo à dispositif à transfert de charge (8) est une caméra couleur, le dispositif de convertisseur d'image (9) raccordé en aval transformant le signal d'image délivré par la caméra couleur en images numériques à niveau de gris ou données-image numériques (90) correspondant à différents niveaux de gris.

22. Dispositif selon la revendication 20, **caractérisé en ce que**
la caméra vidéo à dispositif à transfert de charge est une caméra noir et blanc, qui délivre un signal d'image correspondant à différents niveaux de gris.

23. Dispositif selon l'une quelconque des revendications 19 à 22, **caractérisé en ce que**
la caméra vidéo à dispositif à transfert de charge (8) est agencée de façon à pivoter à 90° autour de son axe optique et à capter la lumière réfléchie par la bobine de filature (6).

24. Dispositif selon l'une quelconque des revendications 13 à 19, **caractérisé en ce que**
le dispositif de prise de vues (8) comprend un appareil photo numérique permettant de capter la lumière réfléchie par la bobine de filature (6), dans lequel dispositif l'appareil photo numérique génère des images numériques à niveau de gris (90) et alimente les moyens d'exploitation (10).

25. Dispositif selon l'une quelconque des revendications 13 à 24, **caractérisé en ce que**
le dispositif de prise de vues (8) comprend des moyens optiques de distorsion, lesquels adaptent le rapport longueur - largeur de la bobine de filature (6) analysée à la fenêtre de prise de vue du dispositif de prise de vues (8, 9).

26. Dispositif selon la revendication 25, **caractérisé en ce que**
les moyens optiques de distorsion comprennent un miroir concave et/ou une optique cylindrique.

27. Dispositif selon l'une quelconque des revendications 13 à 26, **caractérisé en ce que**
les moyens d'exploitation (10) sont agencés de sorte à générer à partir des arêtes dégrossies à l'aide du filtrage des arêtes des informations quant au fait que la bobine de filature analysée (6) soit un bobinot vide, un bobinot comportant des restes de fils réutilisables ou un bobinot avec des restes de fils non réutilisables.

28. Dispositif selon l'une quelconque des revendications 13 à 27, **caractérisé en ce que**
les moyens d'exploitation (10) comprennent un ordinateur, dans lequel les images numériques à niveau de gris (90) du dispositif de prise de vues (8, 9) sont enregistrées sous forme de vecteurs pour le traitement numérique des images.

29. Dispositif selon l'une quelconque des revendications 13 à 28, **caractérisé en ce que**
les moyens d'exploitation (10) sont agencés de sorte à élever au carré sous forme matricielle la matrice de l'image correspondant aux images numériques à niveau de gris (90) du dispositif de prise de vues (8, 9) et à additionner la matrice de l'image élevée au carré à la matrice de l'image originelle, afin d'augmenter le contraste de l'image correspondante.

30. Dispositif selon l'une quelconque des revendications 13 à 29, **caractérisé en ce que**
les moyens d'exploitation (10) sont agencés de sorte à procéder au filtrage des arêtes de la matrice de l'image (16) correspondant aux images numériques à niveau de gris (90) en appliquant l'algorithme de filtre de Sobel sur la matrice de l'image (16).

31. Dispositif selon l'une quelconque des revendications 13 à 30, **caractérisé en ce que**
les moyens d'exploitation (10) sont agencés de sorte à binariser la matrice de l'image (16) obtenue à la suite du filtrage des arêtes et à la soumettre à une érosion avec une soustraction consécutive entre la matrice de l'image obtenue par l'érosion et la matrice de l'image binarisée, afin d'affiner les arêtes contenues au sein de la matrice de l'image (16).

32. Dispositif selon l'une quelconque des revendications 13 à 31, **caractérisé en ce que**
les moyens formant exploitation (10) sont agencés de sorte à déterminer les arêtes des contours contenues dans la matrice de l'image filtrée à l'aide d'un procédé de suivi des arêtes en appliquant le code en chaîne de Freeman.
